(19) Europäisches Patentamt
European Patent Office
Office européen des brevets

(11) **EP 3 990 700 B1**

(12) **FASCICULE DE BREVET EUROPEEN**

(45) Date de publication et mention
de la délivrance du brevet:
**13.09.2023 Bulletin 2023/37**

(21) Numéro de dépôt: **20740683.6**

(22) Date de dépôt: **07.05.2020**

(51) Classification Internationale des Brevets (IPC):
*D21H 17/34* (2006.01)    *D21H 17/44* (2006.01)
*D21H 17/45* (2006.01)    *D21H 21/10* (2006.01)
*C08L 39/02* (2006.01)

(52) Classification Coopérative des Brevets (CPC):
(C-Sets disponibles)
**D21H 17/34; C08F 226/02; C08L 39/02;
D21H 17/44; D21H 17/45; D21H 21/10**    (Cont.)

(86) Numéro de dépôt international:
**PCT/FR2020/050759**

(87) Numéro de publication internationale:
**WO 2020/260779 (30.12.2020 Gazette 2020/53)**

(54) **PROCEDE DE FABRICATION DE PAPIER OU DE CARTON**

VERFAHREN ZUR HERSTELLUNG VON PAPIER ODER KARTON

MANUFACTURING PROCESS OF PAPER OR PAPERBOARD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.06.2019 FR 1907062**

(43) Date de publication de la demande:
**04.05.2022 Bulletin 2022/18**

(73) Titulaire: **SNF Group
42160 Andrézieux-Bouthéon (FR)**

(72) Inventeurs:
• **BARRIERE, Cyril
42160 ANDREZIEUX BOUTHEON (FR)**
• **OLIVIER, Rémi
42160 ANDREZIEUX BOUTHEON (FR)**

• **HUND, René
42160 ANDREZIEUX BOUTHEON (FR)**

(74) Mandataire: **Cabinet Laurent & Charras
Le Contemporain
50 Chemin de la Bruyère
69574 Dardilly Cedex (FR)**

(56) Documents cités:
**EP-A1- 0 331 047    WO-A1-2007/001473
WO-A1-2012/065951**

(52) Classification Coopérative des Brevets (CPC):
(Cont.)

C-Sets
**C08F 226/02, C08F 220/34, C08F 220/34**

**Description**

## DOMAINE DE L'INVENTION

La présente invention concerne un procédé de fabrication de papier ou de carton présentant des propriétés de rétention totale, de rétention de charges et d'égouttage améliorées. Plus précisément, l'invention a pour objet un procédé de fabrication mettant en oeuvre un polymère de N-vinylformamide partiellement hydrolysé sous forme d'émulsion inverse.

Elle a également pour objet les papiers ou cartons obtenus par ce procédé.

## ETAT ANTERIEUR DE LA TECHNIQUE

La mise en oeuvre de systèmes de rétention et d'égouttage est bien connue dans les procédés de fabrication de papier.

Par propriétés de rétention, on entend la capacité à retenir les matières en suspension de la pâte à papier (fibres, fines, charges (carbonate de calcium, oxyde de titane), ...) sur la toile de formation, donc dans le matelas fibreux qui constituera la feuille finale. Le mode d'action des agents de rétention est basé sur la floculation de ces matières en suspension dans l'eau. En effet, les flocs formés sont plus facilement retenus sur la toile de formation.

La rétention de charges consiste à retenir spécifiquement les charges (espèces minérales de faible taille présentant peu d'affinités avec la cellulose). L'amélioration significative de la rétention des charges engendre une clarification des eaux blanches en retenant les charges dans la feuille de papier ainsi qu'en augmentant son grammage. Cela donne également la possibilité de substituer une partie des fibres (espèce la plus onéreuse dans la composition du papier) par des charges (coûts moins élevés) pour réduire les coûts de fabrication du papier.

En ce qui concerne les propriétés d'égouttage (ou drainage), il s'agit de la capacité du matelas fibreux à évacuer ou drainer le maximum d'eau afin que la feuille sèche le plus rapidement possible, notamment lors de la fabrication de la feuille.

Ces deux propriétés (rétention et drainage) étant intimement liées, l'une dépendant de l'autre, il s'agit alors de trouver le meilleur compromis entre la rétention et l'égouttage. De manière générale l'homme du métier fait référence à un agent de rétention et d'égouttage car ce sont les mêmes types de produits qui permettent d'améliorer ces deux propriétés.

Tous les systèmes de rétention et d'égouttage connus dans l'art antérieur sont caractérisés par le fait qu'ils ont pour agent principal de rétention, des polymères hydrosolubles de haut poids moléculaire, supérieur à 1 million g/mol, généralement supérieur à 3 millions g/mol, appelés floculants. Ils sont généralement cationiques et ont la particularité, en raison de leur haut poids moléculaire de se présenter sous forme d'émulsion (inverse), de microémulsion, de poudre ou de dispersion. Ces polymères sont généralement introduits à hauteur de 50 à 800 g/t de polymère sec par rapport au papier sec.

Les points d'introduction de ces agents dans le procédé papetier sont généralement situés dans le circuit court, c'est-à-dire après la pompe de mélange (ou Fan Pump), et donc en pâte diluée (ou Thin Stock) dont la concentration est très généralement inférieure à 1% en poids de matière sèche, le plus souvent comprise entre 0.5 et 1.2%.

Les polyvinylamines sont couramment utilisées comment agent de drainage. De manière générale, les polyvinylamines sont obtenues soit par dégradation d'Hofmann de polyacrylamides ou par hydrolyse d'une polyvinylformamide.

EP 0 331 047décrit un procédé de fabrication du papier mettant en oeuvre un mélange contenant au moins 10 % de poly(N-vinylamide) hydrolysée.

L'hydrolyse de polyvinylformamides, consiste à générer une fonction vinylamine à partir d'une fonction N-vinylformamide. L'hydrolyse peut se faire en milieu acide ou basique. La quantité d'acide ou de base conditionne le taux d'hydrolyse et donc le taux de vinylamine présent dans le polymère final. Les polyvinylamines sont majoritairement obtenues par hydrolyse de polyvinylformamides en solutions aqueuses. L'objectif est d'obtenir des polyvinylamines linéaires et de haut poids moléculaire conférant des propriétés de rétention et d'égouttage optimales lors d'utilisation dans un procédé papetier.

## EXPOSE DE L'INVENTION

De manière inattendue, la Demanderesse, a découvert qu'un procédé papetier mettant en oeuvre au moins un polymère de N-vinylformamide partiellement hydrolysé sous forme d'émulsion inverse et dont le regain cationique est compris entre 30 et 150% permet d'obtenir des performances d'égouttage, de rétention de fibres et de fines, de rétention de charge améliorées. Plus précisément, l'invention concerne un procédé de fabrication d'une feuille de papier ou de carton selon lequel, avant formation de ladite feuille, on ajoute à une suspension fibreuse, en un ou plusieurs points d'injection, au moins un polymère de N-vinylformamide partiellement hydrolysé sous forme d'émulsion inverse et ayant un regain cationique compris entre 30 et 150%.

Dans la suite de la description et dans les revendications, tous les dosages de polymère exprimés en g.t$^{-1}$ sont donnés en poids de polymère par tonne de pâte sèche. La pâte sèche correspond au poids sec de la suspension fibreuse mise en oeuvre dans le procédé selon l'invention.

Dans le cadre de l'invention, un procédé papetier correspond à un procédé de fabrication de papier, carton ou analogue, notamment un procédé de fabrication d'une feuille de papier, carton ou analogues.

Avant la formation de ladite feuille, on ajoute à la suspension fibreuse, en un ou plusieurs points d'injection au moins un polymère de N-vinylformamide partiellement hydrolysé sous forme d'émulsion inverse selon l'invention.

Par suspension fibreuse, on entend la pâte épaisse ou la pâte diluée qui sont à base d'eau et de fibres cellulosiques. La pâte épaisse (Thick Stock), ayant une concentration (en poids) en matière sèche supérieure à 1%, voire supérieure à 3%, est en amont de la pompe de mélange (fan-pump). La pâte diluée (Thin Stock), ayant une concentration (en poids) en matière sèche généralement inférieure à 1%, est située en aval de la pompe de mélange.

Le polymère peut être introduit dans la pâte épaisse (thick stock) ou dans la pâte diluée (thin stock). Il peut être ajouté au niveau de la fan pump ou de la caisse de tête. Préférentiellement, le copolymère est introduit avant la caisse de tête.

Le terme « polymère », désigne aussi bien les homopolymères de N-vinylformamide que les copolymères avec des monomères non ioniques et/ou des monomères anioniques et/ou des monomères cationiques et/ou des monomères zwitterioniques polymérisables avec la N-vinylformamide.

Comme exemples de monomère anionique, on utilise avantageusement au moins un monomère choisi parmi :

- les monomères comprenant au moins une fonction carboxylique, par exemple acide acrylique, acide méthacrylique, acide itaconique et leurs sels ;
- les monomères comprenant au moins une fonction acide sulfonique, par exemple l'acide 2-acrylamido-2-méthylpropane sulfonique (AMPS), l'acide allyl sulfonique et, l'acide methallyl sulfonique et leurs sels.

Les sels de monomère anionique sont généralement des sels de métal alcalin, d'alcalino-terreux ou d'ammonium, préférentiellement des sels de sodium ou de potassium.

Comme exemples de monomère non ionique, on utilise avantageusement au moins un monomère choisi parmi :

- l'acrylamide et ses dérivés, notamment les N-alkylacrylamides, par exemple le N-isopropylacrylamide, le N-tert-butylacrylamide ; les N,N-dialkylacrylamides, par exemple le N,N-diméthylacrylamide ; et le N-méthylolacrylamide ;
- le méthacrylamide et ses dérivés, notamment les N-alkylméthacrylamides, par exemple le N-isopropylméthacrylamide, le N-tert-butylméthacrylamide ; les N,N-dialkylméthacrylamides, par exemple le NN-diméthylméthacrylamide ; et le N-méthylolméthacrylamide ;
- la N-vinylpyridine, la N-vinylpyrrolidone, les hydroxyalkylacrylates, les hydroxyalkyl méthacrylates, les acrylates portant des chaînes alkoxy, et les méthacrylates portant des chaînes alkoxy.

Comme exemples de monomère cationique, on utilise avantageusement au moins un monomère choisi parmi :

- les sels de diallyldialkyl ammonium, par exemple un halogénure (notamment le chlorure) de diallyl dimethyl ammonium (DADMAC) ;
- les acrylates de dialkylaminoalkyle, les méthacrylates de dialkylaminoalkyle, en particulier l'acrylate de dialkylaminoalkyle de dialkylaminoéthyle (ADAME) et le méthacrylate de dialkylaminoéthyle (MADAME), ainsi que leurs formes acidifiées ou quaternisées, par exemple le chlorure de [2-(acryloyloxy)ethyl]triméthylammonium ; les dialkyl-aminoalkylacrylamides, les dialkyl-methacrylamides, ainsi que leurs formes acidifiées ou quaternisées, par exemple le chlorure d'acrylamido-propyl triméthyl ammonium.

La quaternisation des monomères, comme l'ADAME ou MADAME, peut notamment être réalisée au moyen d'un halogénure d'alkyle, par exemple un halogénure de méthyle, avantageusement le chlorure de méthyle.

Comme exemples de monomère zwitterionique, on utilise avantageusement au moins un monomère choisi parmi :

- les monomères sulfobétaïnes comme le sulfopropyl diméthylammonium éthyl méthacrylate, le sulfopropyl diméthylammonium propylméthacrylamide, le sulfopropyl 2-vinylpyridinium ;
- les monomères phosphobétaïnes, comme le phosphate éthyl triméthylammonium éthyl méthacrylate les monomères carboxybétaïnes.

De manière générale, le polymère peut comprendre entre 0 et 50 mol%, plus préférentiellement entre 0 et 30 mol% et encore plus préférentiellement entre 0 et 15 mol% d'au moins un monomère choisi parmi les monomères non ioniques et/ou les monomères anioniques et/ou les monomères cationiques et/ou les monomères zwitterioniques polymérisables avec la N-vinylformamide.

Préférentiellement, le polymère de N-vinylformamide partiellement hydrolysé est un homopolymère de N-vinylformamide. L'hydrolyse partielle des motifs issus de la N-vinylformamide est réalisée sur l'homopolymère de N-vinylformamide.

L'émulsion inverse comprenant au moins un polymère de N-vinylformamide partiellement hydrolysé est composée d'une phase hydrophile comprenant ce polymère, d'une phase lipophile, d'au moins un agent émulsifiant et d'au moins un agent inverseur. Il s'agit d'une émulsion eau dans huile.

La phase lipophile peut être une huile minérale, une huile végétale, une huile synthétique ou un mélange de plusieurs de ces huiles. Des exemples d'huile minérale sont les huiles minérales contenant des hydrocarbures saturés de type aliphatique, naphténique, paraffinique, isoparaffinique, cycloparaffinique ou naphtyle. Des exemples d'huile synthétique sont le polydécène hydrogéné ou le polyisobutène hydrogéné, les esters tel que le stéarate d'octyle ou l'oléate de butyle. La gamme de produits Exxsol® d'Exxon convient parfaitement.

En général, le rapport pondéral de la phase hydrophile à la phase lipophile dans l'émulsion inverse est de préférence de 50/50 à 90/10.

L'émulsion inverse comprend avantageusement de 12 à 26% en poids d'huile et de 35 à 48% en poids d'eau.

Le terme "agent émulsifiant" désigne un agent capable d'émulsifier de l'eau dans une huile alors qu'un "agent inverseur" est un agent capable d'émulsionner une huile dans de l'eau. Généralement, on considère qu'un agent inverseur est un tensioactif ayant un HLB supérieur ou égal à 10, alors qu'un agent émulsifiant est un tensioactif ayant un HLB strictement inférieur à 10.

L'équilibre hydrophile-lipophile (HLB) d'un composé chimique est une mesure de son degré d'hydrophilie ou lipophile, déterminé en calculant les valeurs des différentes régions de la molécule, comme décrit par Griffin en 1949 (Griffin WC, Classification of Surface-Active Agents by HLB, Journal of the Society of Cosmetic Chemists, 1949, 1, pages 311-326).

Avantageusement, l'émulsion inverse contient un agent émulsifiant. Il peut être avantageusement choisi parmi la liste suivante : les polyesters ayant un poids moléculaire compris entre 1000 et 3000 g/mol, les produits de condensation entre un acide poly(isobuténul) succinique ou son anhydride et un polyéthylène glycol, des copolymères séquences ayant un poids moléculaire compris entre 2500 et 3500 g/mol, comme par exemple ceux vendus sous les noms Hypermer®, des extraits de sorbitan, tels que le monooléate ou les polyoléates de sorbitan, l'isostéarate de sorbitan ou le sesquioléate de sorbitan, les esters de sorbitan polyéthoxylés, ou encore l'alcool oléocétylique diéthoxylé ou le laurylacrylate de tétraéthoxylé, des produits de condensation d'alcools gras supérieurs à l'éthylène, comme produit de réaction de l'alcool oléique avec 2 unités oxyde d'éthylène ; des produits de condensation d'alkylphénols et d'oxyde d'éthylène, tels que le produit de réaction du nonyl phénol avec 4 unités d'oxyde d'éthylène. Des amines grasses éthoxylées telles que Witcamide® 511, les produits à base de bétaïne et l'amine éthoxylée sont également de bons candidats en tant qu'agents émulsifiants.

L'émulsion inverse comprend avantageusement de 0,8 à 3% en poids d'au moins un agent émulsifiant.

Avantageusement, l'émulsion inverse contient un agent inverseur. Il peut être avantageusement choisi parmi la liste suivante : les esters de sorbitan éthoxylés tels que l'oléate de sorbitan éthoxylé avec 20 équivalents d'oxyde d'éthylène, le laurate de sorbitan polyéthoxylé avec 20 moles d'oxyde d'éthylène, l'huile de ricin polyéthoxylée avec 40 moles de l'oxyde d'éthylène, l'alcool oléodécylique décaéthoxylé, l'alcool laurylique heptaéthoxylé, l'alcool tridécylique octaéthoxylé ou le monostéarate de sorbitan polyéthoxylé avec 20 moles d'oxyde d'éthylène. L'agent inverseur peut également être un polyoxyéthylène alkylphénol ; polyoxyéthylène (10 moles) d'éther cétylique ; polyoxyéthylène alkyl aryl éther ; les dérivés d'ammonium quaternaire ; oléate de potassium ; éthosulfate de N-cétyl-N-éthyl morpholinium ; laurylsulfate de sodium ; des produits de condensation d'alcools gras supérieurs avec l'oxyde d'éthylène, tels que le produit de réaction d'alcool oléylique avec 10 unités d'oxyde d'éthylène ; des produits de condensation d'alkylphénols et d'oxyde d'éthylène, tels que les produits de réaction d'isooctylphénol avec 12 unités oxyde d'éthylène ; les produits de condensation d'aminés d'acides gras supérieurs à cinq unités ou plus d'oxyde d'éthylène ; l'oxyde d'éthylène tristérylphénol ; des produits de condensation d'oxyde d'éthylène d'esters gras partiels supérieurs d'alcool polyhydrique et de leurs anhydrides internes (par exemple l'anhydride de mannitol et l'anhydride de sorbitol) ; l'oxyde d'amine ; un alkyl polyglucoside ; un glucamide ; un ester phosphate ou un sel d'acide alkylbenzènesulfonique ; tensioactif polymère hydrosoluble.

L'émulsion inverse comprend avantageusement de 3 à 8% en poids d'au moins un agent d'inversion.

Préférentiellement l'émulsion inverse contient entre 20 et 50 % en poids de polymère de N-vinylformamide partiellement hydrolysé, encore plus préférentiellement entre 25 et 45 % en poids.

Le polymère de N-vinylformamide partiellement hydrolysé dérive directement d'une réaction d'hydrolyse acide ou basique des fonctions formamide lorsque le polymère de N-vinylformamide est sous forme d'émulsion inverse. Les agents d'hydrolyse respectivement basique et acide les plus utilisés sont la soude et l'acide phosphorique.

L'homme du métier saura choisir les conditions réactionnelles adaptées pour atteindre le pourcentage d'hydrolyse requis.

Pour le procédé de l'invention, entre 10 et 60 mol%, avantageusement entre 10 et 40 mol% des fonctions N-vinylformamide du polymère sont hydrolysées.

Préférentiellement, le polymère de N-vinylformamide partiellement hydrolysé sous forme d'émulsion inverse a une densité de charge cationique comprise entre 1.4 et 5.4 méq.g$^{-1}$.

Comme déjà indiqué, l'hydrolyse peut se faire en milieu acide ou basique, avantageusement en solution aqueuse.

Lorsque l'hydrolyse a été effectuée en milieu basique, la phase aqueuse de l'émulsion inverse, contient inévitablement des sels. A titre d'exemple, pour une hydrolyse en présence de soude, la phase aqueuse contient du formiate de sodium.

L'hydrolyse est réalisée sur le polymère, c'est-à-dire après la polymérisation des monomères. Les unités monomériques résultant de la polymérisation de la N-vinylformamide ($CH_2=CH-NH-C(=O)H$) sont de formule $-CH_2-CH-NH-C(=O)H$. Leur hydrolyse permet la formation de fonctions vinylamine $-CH_2-CH-NH_2$.

La phase aqueuse peut aussi contenir d'autres agents réactionnels couramment utilisés pendant la réaction d'hydrolyse. Ces agents permettent notamment de contrôler la réticulation du polymère pendant la réaction d'hydrolyse. Ces agents sont couramment appelés « antigelling agent ». La phase aqueuse de l'émulsion inverse contient entre 5000 et 50 000 ppm d'« antigelling agent », plus avantageusement entre 5000 et 30 000 ppm, en poids par rapport au poids du polymère de N-vinylformamide partiellement hydrolysé. En d'autres termes, l'émulsion inverse présente un rapport en poids polymère de N-vinylformamide partiellement hydrolysé / antigelling agent est compris entre 1 000 000/5000 et 1 000 000/50 000, plus avantageusement entre 1 000 000/5000 et 1 000 000/30 000.

L'antigelling agent est un agent anti-gélation. Il permet d'éviter une réticulation complète du polymère, et donc la formation d'un polymère insoluble sous forme de gel.

L'antigelling agent est choisi dans le groupe comprenant les sulfites de métal alcalin, les sulfites de métal alcalino-terreux, les hydrogénosulfites de métal alcalin, les hydrogénosulfites de métal alcalino-terreux, les bisulfites de métal alcalin, les bisulfites de métal alcalino-terreux, le chlorhydrate d'hydroxylamine, le sulfate d'hydroxylamine, les dithionite de métal alcalin, dithionite de métal alcalino-terreux, les borohydrure de métal alcalin, les borohydrure de métal alcalino-terreux, l'hydroxymethanesulfinate de métal alcalin, l'hydroxymethanesulfinate de métal alcalino-terreux, et leurs mélanges. L'antigelling agent est préférentiellement un bisulfite de métal alcalin, avantageusement le bisulfite de sodium. L'hydroxymethanesulfinate de métal alcalin est avantageusement la rongalite c'est-à-dire l'hydroxymethanesulfinate de sodium.

Le regain cationique est le gain en cationicité entre la cationicité théorique et la cationicité mesurée.

En pratique, la cationicité mesurée en milliéquivalents par gramme de polymère (méq.g$^{-1}$) est déterminée par titrage colorimétrique d'une solution de polymère à 5 g.L$^{-1}$ dans l'eau. La cationicité théorique (en méq.g$^{-1}$) est déterminée par titrage colorimétrique d'une solution à 5 g.L$^{-1}$ dans l'eau de polymère après un taux de cisaillement important (8 000 tr.min$^{-1}$ pendant 10 minutes). Ainsi, le regain de cation est le gain en cationicité (en méq.g$^{-1}$) de la solution après cisaillement vis-à-vis de la solution sans cisaillement.

Le regain cationique peut notamment être mesuré au moyen de tout appareil permettant de cisailler le polymère à 8000 tr/min, par exemple un appareillage de type disperseur IKA WERKE - ULTRA TURRAX T50 Basic.

Selon l'invention, le polymère de N-vinylformamide partiellement hydrolysé sous forme d'émulsion inverse a un regain cationique compris entre 30 et 150%.

Pour le procédé de l'invention, le polymère partiellement hydrolysé de N-vinylformamide a une viscosité Brookfield supérieure à 1.2 cps à une concentration de 0.1% en poids dans une solution aqueuse à 1M de NaCl, à 23°C, avec un module UL et à 60 tr.min$^{-1}$.

Le polymère de N-vinylformamide partiellement hydrolysé sous forme d'émulsion inverse est introduit dans la suspension fibreuse à raison de 100 à 800 g.t$^{-1}$ de pâte sèche.

Le polymère de N-vinylformamide est partiellement hydrolysé sous forme d'émulsion inverse et en présence d'un antigelling agent. Il est avantageusement ajouté à la suspension fibreuse sous forme d'émulsion inverse, plus avantageusement l'émulsion inverse dans laquelle est réalisée l'hydrolyse.

Cet agent de rétention peut être utilisé seul ou en combinaison avec un agent de rétention secondaire. Préférentiellement, dans le procédé de l'invention, on ajoute à la suspension fibreuse un agent de rétention secondaire choisi parmi les polymères organiques et/ou les microparticules inorganiques.

Cet agent secondaire ajouté à la suspension fibreuse est choisi parmi les polymères anioniques au sens large, qui peuvent donc être (sans être limitatif) linéaires, branchés, réticulés, hydrophobes, associatifs et/ou les microparticules inorganiques (telles que la bentonite, la silice colloïdale).

Préférentiellement, cet agent de rétention anionique secondaire est introduit dans la suspension fibreuse à raison de 20 à 2500 g.t$^{-1}$ de pâte sèche.

On notera que l'ordre d'introduction du polymère de N-vinylformamide partiellement hydrolysé et de l'éventuel agent de rétention secondaire, en mélange ou non, est à optimiser par l'homme de métier au cas par cas, en fonction de chaque système papetier.

Les exemples suivants illustrent l'invention sans toutefois en limiter la portée.

## EXEMPLES DE REALISATION DE L'INVENTION

### Produits testés dans les exemples :

Les produits suivants (Tableau 1) sont des polymères sous forme d'émulsion inverse eau dans huile. Les polymères dans les émulsions A à D (exemples) et E à G (contre-exemples) sont des polymères de N-vinylformamide partiellement hydrolysés. Les émulsions H et I sont respectivement des agents de rétentions anioniques et amphotères, utilisés comme agents de rétention secondaires en combinaison avec les émulsions précédentes. Toutes les émulsions contiennent 34.5 % en poids de polymère, le rapport pondéral de la phase hydrophile à la phase lipophile étant de 72/28. La phase lyophile est de l'Exxsol D 100 (hydrocarbures aliphatiques C12-C15).

**Tableau 1 : Performances d'égouttage**

| Emulsion | Densité de charge (méq.g$^{-1}$) | Viscosité UL (cPs) | Regain cationique (%) | Fonctions N-vinylformamide hydrolysées (mol%) | Quantité bisulfite Na | Performances égouttage sous vide |
|---|---|---|---|---|---|---|
| A | 2,7 | 1,35 | 33% | 20 | 1% | Excellentes |
| B | 2,7 | 1,35 | 115% | 20 | 2% | Excellentes |
| C | 2,7 | 1,4 | 40% | 20 | 2% | Excellentes |
| D | 5,4 | 1,35 | 96% | 40 | 2% | Excellentes |
| E | 2,7 | 1,25 | 200% | 20 | 0% | Moyennes |
| F | 2,7 | 1,8 | 13% | 20 | 10% | Moyennes |
| G | 5,4 | 1,1 | 220% | 40 | 0% | Moyennes |
| H | 5,4 | 2 | N/A | N/A | N/A | N/A |
| I | 1,35 | 3 | N/A | N/A | N/A | N/A |

La quantité d'antigelling agent (bisulfite Na) est exprimée en pourcentage en poids, par rapport au poids du polymère de N-vinylformamide partiellement hydrolysé (1% = 10 000 ppm).

Pour l'émulsion H, le polymère est un copolymère d'acrylamide et d'acrylate de sodium (70/30 %mol).

Pour l'émulsion I, le polymère est un terpolymère d'acrylamide, d'acrylate de sodium et d'acrylate de diméthylaminoéthyle quaternisé avec du chlorure de méthyle (50/20/30 % mol).

Les viscosités UL sont mesurées à une concentration de 0.1% en poids de polymère dans une solution aqueuse à 1M de NaCl, à 23°C, avec un module UL et à 60 tr.min$^{-1}$.

Le regain cationique est déterminé par titrage colorimétrique d'une solution de polymère de 5 g.L$^{-1}$ après un taux de cisaillement de 8000 tr.min$^{-1}$ sur 10 minutes.

### Procédures utilisées dans les exemples :

a) Les différents types de pâtes utilisées

Pâte de fibres vierges (utilisée dans les exemples 1, 2, 3, 4, 5) :

La pâte humide est obtenue par désintégration de pâte sèche afin d'obtenir une concentration aqueuse finale de 1% en poids. Il s'agit d'une pâte à pH neutre composée à 10% de fibres longues vierges blanchies, 70% de fibres courtes vierges blanchies et 20% de fibres mécaniques.

Cette pâte comprend en outre 30% de GCC additionnels (Hydrocal® 55 de chez Omya) par rapport au poids des fibres (le GCC étant du carbonate de calcium broyé).

Pâte de fibres recyclées (utilisée dans l'exemple 6) :

La pâte humide est obtenue par désintégration de pâte sèche afin d'obtenir une concentration aqueuse finale de 1% en poids. Il s'agit d'une pâte à pH neutre composée à 100% de fibres de cartons recyclées.

b) Evaluation de la rétention totale et de la rétention de charges

Les différents résultats sont obtenus grâce à l'utilisation d'un récipient de type « Britt Jar », avec une vitesse d'agitation de 1000 tours par minute.

La séquence d'ajout des différents agents de rétention étant la suivante :

T=0s : Mise en agitation de 500ml de pâte à 0,5% en poids
T=10s : Ajout de l'agent de rétention cationique
T=20s : Ajout de l'agent de rétention secondaire
T=30s : Elimination des 20 premiers ml correspondant au volume mort sous la toile, puis récupération de 100mL d'eaux blanches

La rétention première passe en pourcentage (%FPR : First Pass Rétention), correspondant à la rétention totale est calculée selon la formule suivante :

$$\%FPR = (C_{HB}-C_{WW})/C_{HB}*100$$

La rétention première passe des cendres en pourcentage (%FPAR : First Pass Ash Rétention) est calculée selon la formule suivante :

$$\%FPAR = (A_{HB}-A_{WW})/A_{HB}*100$$

Avec :

- $C_{HB}$ : Consistance de la caisse de tête
- $C_{WW}$ : Consistance des eaux blanches
- $A_{HB}$ : Consistance des cendres de la caisse de tête
- $A_{WW}$ : Consistance des cendres des eaux blanches

c) Evaluation des performances d'égouttage (DDA)

Le DDA (Dynamic Drainage Analyzer) permet de déterminer, de manière automatique, le temps (en secondes) nécessaire pour égoutter sous vide une suspension fibreuse. Les polymères sont ajoutés à la pâte humide (0.6 litre de pâte à 1.0 % en poids) dans le cylindre du DDA sous agitation à 1000 tours par minute :

T=0s : mise en agitation de la pâte
T=10s : ajout de l'agent de rétention cationique
T=20s : Ajout de l'agent de rétention secondaire
T=30s : arrêt de l'agitation et égouttage sous vide à 200mBar pendant 70s

La pression sous la toile est enregistrée en fonction du temps. Lorsque toute l'eau est évacuée du matelas fibreux, l'air passe à travers celui-ci faisant apparaitre une rupture de pente sur la courbe représentant la pression sous toile en fonction du temps. Le temps, exprimé en secondes, relevé à cette rupture de pente correspond au temps d'égouttage. Plus le temps est faible, meilleur est donc l'égouttage sous vide.

**Exemple 1** : **Influence du regain cationique sur les performances d'égouttage.**

8

**Tableau 2 : Influence du regain cationique sur les performances d'égouttage**

| Emulsions | Blanc | A | B | C | D | E | F | G |
|---|---|---|---|---|---|---|---|---|
| Regain cationique : | N/A | 33% | 115% | 40% | 96% | 200% | 13% | 220% |
| DDA (750g/T de : pâte sèche; | 28,9 | 14,5 | 13,9 | 13,2 | 13,2 | 19,8 | 16,7 | 21,3 |

Les performances d'égouttage (Tableau 2) sont meilleures pour les polymères de N-vinylformamide partiellement hydrolysés dont le regain cationique est compris entre 30 et 150 % et ceci que ce soit pour une densité de charge de 2.7 méq.g$^{-1}$ (émulsions A à C, E et F) et ou de 5.4 méq.g$^{-1}$. (émulsions D et G).

**Exemple 2 : Influence du regain cationique sur la rétention totale et la rétention de charge.**

**Tableau 3 : Influence du regain cationique sur la rétention**

| Emulsions | blanc | A | B | C | E | F |
|---|---|---|---|---|---|---|
| Regain cationique | N/A | 33% | 115% | 40% | 200% | 13% |
| Rétention FPR (%) | 61 | 78,2 | 77,8 | 78,49 | 65,5 | 71,4 |
| Rétention FPAR (%) | 11 | 47 | 40 | 52 | 11 | 26 |

La rétention totale et la rétention de charge (Tableau 3) sont améliorées pour les polymères de N-vinylformamide partiellement hydrolysés dont le regain cationique est compris entre 30 et 150 % (émulsions A à C).

**Exemple 3 : Performances d'égouttage lorsque le polymère de N-vinylformamide partiellement hydrolysé sous forme d'émulsion inverse est utilisé en combinaison avec un agent de rétention secondaire.**

**Tableau 4 : Performances d'égouttage**

| Emulsions | blanc | C | C + H | C + I | D | D + H | D + I | E | E + H | E + I |
|---|---|---|---|---|---|---|---|---|---|---|
| DDA (s) | 28,9 | 13,2 | 12,1 : | 12,3 | 13,2 | 11,5 | 11,8 | 18,8 | 16,5 | 14,3 |

Pour cet exemple, le dosage pour les émulsions C, D et E est de 750 g/t de pâte sèche et pour les agents de rétention secondaires (émulsion H et I) de 150 g/t de pâte sèche (tableau 4).

En combinaison, les performances d'égouttage sont meilleures lorsque le polymère de N-vinylformamide sous forme d'émulsion inverse a un regain cationique compris entre 30 et 150%.

**Revendications**

1. Procédé de fabrication d'une feuille de papier ou de carton selon lequel, avant formation de ladite feuille, on ajoute à une suspension fibreuse, en un ou plusieurs points d'injection, 100 à 800 g.t$^{-1}$ de pâte sèche d'au moins un polymère de N-vinylformamide, partiellement hydrolysé sous forme d'émulsion inverse en présence d'antigelling agent, et ayant un regain cationique compris entre 30 et 150%, l'émulsion inverse présentant un rapport en poids polymère de N-vinylformamide partiellement hydrolysé/antigelling agent compris entre 1 000 000/5000 et 1 000 000/50 000,

le polymère de N-vinylformamide partiellement hydrolysé comprend des fonctions N-vinylformamide dont 10 à 60 mol% sont hydrolysées,
le polymère de N-vinylformamide partiellement hydrolysé ayant une viscosité Brookfield supérieure à 1.2 cps à une concentration de 0.1% en poids dans une solution aqueuse à 1M de NaCl, à 23°C, avec un module UL et à 60 tr.min$^{-1}$,
l'antigelling agent étant choisi dans le groupe comprenant les sulfites de métal alcalin, les sulfites de métal alcalino-terreux, les hydrogénosulfites de métal alcalin, les hydrogénosulfites de métal alcalino-terreux, les bisulfites de métal alcalin, les bisulfites de métal alcalino-terreux, le chlorhydrate d'hydroxylamine, le sulfate d'hydroxylamine, les dithionite de métal alcalin, dithionite de métal alcalino-terreux, les borohydrure de métal alcalin, les borohydrure de métal alcalino-terreux, l'hydroxymethanesulfinate de métal alcalin, l'hydroxymethanesulfinate de métal alcalino-terreux, et leurs mélanges,

le regain cationique étant le gain en cationicité entre la cationicité théorique et la cationicité mesurée,

la cationicité théorique, en méq.g$^{-1}$, étant déterminée par titrage colorimétrique d'une solution à 5 g.L$^{-1}$ dans l'eau de polymère après un taux de cisaillement important à 8 000 tr.min$^{-1}$ pendant 10 minutes,

la cationicité mesurée, en méq.g$^{-1}$, étant déterminée par titrage colorimétrique d'une solution de polymère à 5 g.L$^{-1}$ dans l'eau.

2. Procédé selon la revendication 1, *caractérisé* **en ce que** l'émulsion inverse contient entre 20 et 50 % en poids de polymère de N-vinylformamide partiellement hydrolysé.

3. Procédé selon l'une des revendications précédentes, *caractérisé* **en ce que** le polymère de N-vinylformamide partiellement hydrolysé sous forme d'émulsion inverse a une densité de charge cationique comprise entre 1.4 et 5.4 méq.g$^{-1}$.

4. Procédé selon l'une des revendications précédentes, *caractérisé* **en ce qu'**on ajoute à la suspension fibreuse un agent de rétention secondaire choisi parmi les polymères organiques et/ou les microparticules inorganiques.

5. Procédé selon l'une des revendications précédentes, *caractérisé* **en ce qu'**on ajoute à la suspension fibreuse un agent de rétention anionique secondaire à raison de 20 à 2500 g.t$^{-1}$ de pâte sèche.

6. Procédé selon l'une des revendications précédentes, *caractérisé* **en ce que** le polymère de N-vinylformamide partiellement hydrolysé est sous forme d'émulsion inverse eau dans huile comprenant 12 à 26% en poids d'huile et de 35 à 48% en poids d'eau.

7. Procédé selon l'une des revendications précédentes, *caractérisé* **en ce que** le polymère de N-vinylformamide partiellement hydrolysé comprend des fonctions N-vinylformamide dont 10 à 40 mol% sont hydrolysées.

8. Procédé selon l'une des revendications précédentes, *caractérisé* **en ce que** le polymère de N-vinylformamide partiellement hydrolysé comprend entre 0 et 50 mol%, d'au moins un monomère choisi dans le groupe constitué des monomères non ioniques, des monomères anioniques, des monomères cationiques, des monomères zwitterioniques et leurs mélanges.

9. Procédé selon l'une des revendications 1 à 7, *caractérisé* **en ce que** le polymère de N-vinylformamide partiellement hydrolysé sous forme d'émulsion inverse est un homopolymère de N-vinylformamide partiellement hydrolysé.

10. Procédé selon l'une des revendications précédentes, *caractérisé* **en ce que** l'antigelling agent est le bisulfite de sodium.

11. Procédé selon l'une des revendications précédentes, *caractérisé* **en ce que** l'émulsion inverse présente un rapport en poids polymère de N-vinylformamide partiellement hydrolysé/antigelling agent est compris entre 1 000 000/5000 et 1 000 000/30 000.

**Patentansprüche**

1. Verfahren zur Herstellung eines Papier- oder Kartonbogens, bei dem, vor der Bildung des Bogens, zu einer Fasersuspension an einem oder mehreren Einspritzpunkten 100 bis 800 g.t$^{-1}$ Trockenmasse mindestens eines N-Vinylformamid-Polymers, das teilweise in Form einer inversen Emulsion hydrolysiert ist, in Anwesenheit eines Antigeliermittels hinzugefügt werden, und das eine kationische Rückgewinnung zwischen 30 und 150 % aufweist, wobei die inverse Emulsion ein Gewichtsverhältnis von teilweise hydrolysiertem N-Vinylformamid-Polymer zu Antigeliermittel zwischen 1.000.000/5000 und 1.000.000/50.000 aufweist.

das teilweise hydrolysierte N-Vinylformamid-Polymer umfasst N-Vinylformamid, von dem 10 bis 60 mol% hydrolysiert sind;

das teilweise hydrolysierte N-Vinylformamid-Polymer hat eine Brookfield - Viskosität von über 1.2 cps bei einer Konzentration von 0.1 Gewichts-%, in einer wässrigen Lösung mit 1M NaCl, bei 23°C, mit einem Modul UL und bei 60 t.min$^{-1}$, das Antigeliermittel wird ausgewählt aus der Gruppen umfassend die Alkalimetallsulfite, Erdalkalimetallsulfite, Alkalimetall- Hydrogensulfite, Erdalkalimetall- Hydrogensulfite, Alkalimetall - Bisulfite, Erdalkalimetall-Bisulfite, Hydroxylaminchlorhydrat Hydroxylaminsulfate, Alkalimetalldithionit, Erdalkalimetalldithionit, Alkalimetallborohydrid, Erdalkalimetallborohydrid, Alkalimetallhydroxymethanesulfinat, Erdalkalimetallhydroxymethanesulfinate und ihre Mischungen.

bei der kationischen Rückgewinnung handelt es sich um den Zuwachs an Kationizität zwischen der theoretischen Kationizität und der gemessenen Kationizität,

die theoretische Kationizität, in mEq.g$^{-1}$, wird bestimmt durch kolorimetrische Titration einer Lösung mit 5 g.L$^{-1}$ im Polymerwasser, nach einer hohen Scherrate von 8 000 tr.min$^{-1}$ 10 Minuten lang,

die gemessene Kationizität, in mEq.g$^{-1}$, wird bestimmt durch kolorimetrische Titration einer Polymerlösung mit 5 g.L$^{-1}$ in Wasser.

2. Verfahren nach Anspruch 1, **_dadurch gekennzeichnet, dass_** die inverse Emulsion zwischen 20 und 50 Gewichts-% teilweise hydrolysiertes N-Vinylformamid-Polymer enthält.

3. Verfahren nach einem der vorangehenden Ansprüche, **_dadurch gekennzeichnet, dass_** das teilweise hydrolysierte N-Vinylformamid-Polymer in Form einer inversen Emulsion eine kationische Ladungsdichte zwischen 1.4 und 5.4 mEq.g$^{-1}$. hat.

4. Verfahren nach einem der vorangehenden Ansprüche, **_dadurch gekennzeichnet, dass_** zu der Fasersuspension ein sekundäres Retentionsmittel gegeben wird, ausgewählt aus den organischen Polymeren und/ oder den anorganischen Mikropartikeln.

5. Verfahren nach einem der vorangehenden Ansprüche, **_dadurch gekennzeichnet, dass_** zu der Fasersuspension ein sekundäres anionisches Retentionsmittel gegeben wird, in einer Menge von 20 bis 2500 g.t$^{-1}$ Trockenmasse.

6. Verfahren nach einem der vorangehenden Ansprüche, **_dadurch gekennzeichnet, dass_** das teilweise hydrolysierte N-Vinylformamid-Polymer die Form einer inversen Emulsion Wasser in Öl hat, die 12 bis 26 Gewichts-% Öl und 35 bis 48 Gewichts- % Wasser enthält.

7. Verfahren nach einem der vorangehenden Ansprüche, **_dadurch gekennzeichnet, dass_** das teilweise hydrolysierte N-Vinylformamid-Polymer N-vinylformamid - Funktionen umfasst, von denen 10 bis 40 mol% hydrolysiert sind.

8. Verfahren nach einem der vorangehenden Ansprüche, **_dadurch gekennzeichnet, dass_** das teilweise hydrolysierte N-Vinylformamid-Polymer zwischen 0 und 50 mol%, mindestens eines Monomers enthält, ausgewählt aus der Gruppe bestehend aus nicht ionischen Monomeren, anionischen Monomeren, kationischen Monomeren, zwitterionischen Monomeren und ihren Mischungen.

9. Verfahren nach einem der Ansprüche 1 bis 7, **_dadurch gekennzeichnet, dass_** das teilweise hydrolysierte N-Vinylformamid-Polymer in Form einer inversen Emulsion ein teilweise hydrolysiertes N-Vinylformamid-Homopolymer ist.

10. Verfahren nach einem der vorangehenden Ansprüche, **_dadurch gekennzeichnet, dass_** das Antigeliermittel Natriumbisulfit ist.

11. Verfahren nach einem der vorangehenden Ansprüche, **_dadurch gekennzeichnet, dass_** die inverse Emulsion ein Gewichtsverhältnis teilweise hydrolysiertes N-Vinylformamid-Polymer/ Antigeliermittel zwischen 1 000 000/ 5000 und 1 000 000/ 30 000 aufweist.

## Claims

1. Process for manufacturing a sheet of paper or cardboard, according to which, before said sheet is formed, 100 to 800 g.t$^{-1}$ of dry pulp of at least one N-vinylformamide polymer, partially hydrolyzed in the form of an inverse emulsion in the presence of an anti-gelling agent, and having a cationic regain of between 30 and 150%, is added to a fibrous suspension at one or more injection points, the inverse emulsion having a partially hydrolyzed N-vinylformamide polymer/anti-gelling agent weight ratio of between 1,000,000/5,000 and 1,000,000/50,000,

the partially hydrolyzed N-vinylformamide polymer comprises N-vinylformamide functions of which 10 to 60 mol% are hydrolyzed,

the partially hydrolyzed N-vinylformamide polymer having a Brookfield viscosity greater than 1.2 cps at a concentration of 0.1% by weight in a 1M aqueous solution of NaCl, at 23°C, with a UL modulus and at 60 rpm$^{-1}$,

the anti-gelling agent being selected from the group comprising alkali metal sulfites, alkaline-earth metal sulfites, alkali metal hydrogen sulfites, alkaline-earth metal hydrogen sulfites, alkali metal bisulfites, alkaline-earth metal bisulfites, hydroxylamine hydrochloridrate, hydroxylamine sulfate, alkali metal dithionite, alkaline-earth metal dithionite, alkali metal borohydride, alkaline-earth metal borohydride, alkali metal hydroxy methane sulfonate, alkaline-earth metal hydroxy methane sulfonate, and mixtures thereof.

the cationic regain being the gain in cationicity between the theoretical and measured cationicity,

the theoretical cationicity, in meq.g$^{-1}$, being determined by colorimetric titration of a 5 g.L$^{-1}$ solution of polymer in water after a high shear rate of 8,000 rpm$^{-1}$ for 10 minutes,

the measured cationicity, in meq.g$^{-1}$, being determined by colorimetric titration of a 5 g.L$^{-1}$ solution of polymer in water.

2. Process according to claim 1, *characterized* **in that** the inverse emulsion contains between 20 and 50% by weight of partially hydrolyzed N-vinylformamide polymer.

3. Process according to one of the preceding claims, *characterized* **in that** the N-vinylformamide polymer partially hydrolyzed in the form of an inverse emulsion has a cationic charge density between 1.4 and 5.4 meq.g$^{-1}$.

4. Process according to one of the preceding claims, *characterized* **in that** a secondary retention agent selected from organic polymers and/or inorganic microparticles is added to the fibrous suspension.

5. Process according to one of the preceding claims, *characterized* **in that** a secondary anionic retention agent is added to the fibrous suspension at a rate of 20 to 2500 g.t$^{-1}$ of dry pulp.

6. Process according to one of the preceding claims, *characterized* **in that** the partially hydrolyzed N-vinylformamide polymer is in the form of a water-in-oil inverse emulsion comprising 12 to 26% by weight of oil and 35 to 48% by weight of water.

7. Process according to one of the preceding claims, *characterized* **in that** the partially hydrolyzed N-vinylformamide polymer comprises N-vinylformamide functions of which 10 to 40 mol% are hydrolyzed.

8. Process according to one of the preceding claims, *characterized* **in that** the partially hydrolyzed N-vinylformamide polymer comprises between 0 and 50 mol% of at least one monomer selected from the group consisting of non-ionic monomers, anionic monomers, cationic monomers, zwitterionic monomers, and mixtures thereof.

9. Method according to one of claims 1 to 7, *characterized* **in that** the N-vinylformamide polymer partially hydrolyzed in the form of an inverse emulsion is a partially hydrolyzed N-vinylformamide homopolymer.

10. Process according to one of the preceding claims, *characterized* **in that** the anti-gelling agent is sodium bisulfite.

11. Process according to one of the preceding claims, *characterized* **in that** the inverse emulsion has a partially hydrolyzed N-vinylformamide polymer/anti-gelling agent weight ratio of between 1,000,000/5,000 and 1,000,000/30,000.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• EP 0331047 A

**Littérature non-brevet citée dans la description**

• **GRIFFIN WC.** Classification of Surface-Active Agents by HLB. *Journal of the Society of Cosmetic Chemists,* 1949, vol. 1, 311-326